# EUROPEAN PATENT SPECIFICATION

(11) **EP 4 004 417 B1**
(45) Date of publication and mention of the grant of the patent: **30.08.2023**
(21) Application number: 20761517.0
(22) Date of filing: 24.07.2020
(51) Int. Cl.: F16L 1/16, B63B 35/03, B65H 75/42, F16L 1/19, F16L 1/20

(54) **MARINE REEL-LAY PIPELAYING VESSEL**
SCHIFF ZUM REEL-LAY-VERLEGEN VON ROHREN IM MEER
NAVIRE DE POSE EN DÉROULÉ DE CANALISATION MARINE

(30) Priority: 26.07.2019 NL 2023579; 15.10.2019 NL 2024021; 05.03.2020 NL 2025059
(43) Date of publication of application: 01.06.2022
(73) Proprietor: Itrec B.V., 3115 HH Schiedam (NL)
(72) Inventor: DONKERS, Jeroen Adrianus Joseph, 3115 HH SCHIEDAM (NL); VEHMEIJER, Terence Willem August, 3115 HH SCHIEDAM (NL)
(74) Representative: EP&C
(86) International application number: PCT/EP2020/071016
(87) International publication number: WO 2021/018787

(56) References cited:
- GB-A- 2 469 519
- US-A1- 2017 248 252
- US-B1- 6 371 694

## Description

The present invention relates to a marine pipeline installation vessel for laying an offshore pipeline in the sea, onto the seabed, said vessel at least being adapted to carry out the reel lay method. More particularly, the present invention relates to an improved vessel and method for laying a pipeline. The invention is defined in the appended claims. The vessel provides a hull and a deck, wherein in the hull a reel well is provided which is located below deck, the reel well being flanked by a left-hand hull section and a right-hand hull section. The vessel further comprises a left and a right vertical storage reel, arranged adjacent to each other and each with a lower part thereof in the reel well; the left storage reel being rotatable about a left reel rotation axis, and the right storage reel being rotatable about a right reel rotation axis.

Reel type pipelaying vessels are typically employed in deep water situations. Such pipelaying vessels have been built by the applicant for many years now and usually include at least one vertical storage reel, a left and right reel support structure, a pipeline launch assembly comprising a pipeline guide, a straightener, tensioner and pipeline support device to be able to lay the offshore pipeline into the body of water towards the floor of the body of water. See for example US2017248252.

Each storage reel of the vessel according to the invention is rotatable about a horizontal reel axis and comprises
- a left and right vertical flange between which a hub extends;
- a hub being adapted for the storage of a spooled pipeline to be laid, the hub defining the reel rotation axis.

Onto the hub, multiple layers, each comprising several windings of pipeline, can be stored.

As is common for this type of pipeline installation vessels, a pipeline launch assembly is mounted to the vessel downstream of the reels in a direction of unspooling, which pipeline launch assembly is adapted to launch the unwound pipeline in a firing line into the sea. The pipeline launch assembly comprises a pipeline guide adapted to guide unwounded pipeline from the storage reel over the pipeline guide into the firing line. The pipeline launch assembly further comprises at least one tensioner provided downstream of the pipeline guide which is adapted for engaging the pipeline in the firing line and supporting at least part of the weight of the launched pipeline to control the rate of laying of the pipeline on the seabed.

A storage reel for pipelines easily weighs about 700 metric tons and depending on the pipe diameter can store several kilometers of pipeline. For instance using a 25 meter diameter reel, the reel is able to store 7,5 km of pipeline with a pipe diameter of 16 inches or 80 km of pipeline with a pipe diameter of 4 inches. In total, a filled reel, i.e. a reel including pipeline to be laid, may weigh up to 2500 to 4000 metric tons.

The vessel further comprises a left reel support structure provided on the left-hand hull section, and a right reel support structure provided on the right-hand hull section.

The weight of the storage reel is typically supported by a left and right reel support structure, located on opposite sides of the reel and supporting the reel for rotation about a reel rotation axis. The left and right support structures are supported by the vessel.

In order to promote proper unwinding of a pipeline, also referred to as unspooling of the pipeline from the storage reel to the pipeline guide, the pipeline departing angle is preferably essentially 90°, wherein the pipeline departing angle is defined by the angle between the unspooling direction of a winding of pipeline from the hub and the reel rotation axis. For a system comprising a storage reel and pipeline guide, left and right fleet angles can be defined to determine the spooling and unspooling quality of the storage reel. The left and right fleet angle are defined as the angle between a first line drawn from the guide departure point to the storage reel, perpendicular to the reel axis, and a second line drawn from the guide departure point to the left and right flange, respectively. Advantageously, the left and right fleet angles do not exceed 7,5°, preferably not larger than 5,5°. The larger the fleet angles, the poorer the spooling and unspooling, which may damage the pipeline through crushing and abrasion.

In order to increase the vessel capacity, in particular to be able to store more pipeline, in the past systems were invented comprising storage reels having a broader hub, thus capable to store more pipeline. To keep the fleet angles acceptable, the fleet angle was adjusted by allowing the pipeline guide, with the launch assembly, to translate over a distance during unspooling the pipeline from the storage reel. See e.g. patent publications US2003/0044234, US4345855 and US4687376.

An alternative solution to increase the capacity of a vessel is presented in patent publication US 6371694. Rather than increasing the dimensions of a single storage reel, here two adjacent storage reels are provided in an angular position, the mid-planes of the wheels intersecting in the vertical longitudinal mid-plane of the vessel.

Patent publication US2017248252 discloses a set up with two storage reels, each pivotably supported. The reels are each supported by a left and a right support structure, which support structures are embodied to form a pivoting structure allowing an angular adjustment of the horizontal reel rotation axis about a vertical axis to alter the angular position of the at least one storage reel.

Publication US4687376 discloses translatable auxiliary storage reels for pipelines. These storage reels are supported on so-called 'spooling track assemblies' providing for a transverse movement of a storage reel between port and starboard positions. It is noticed that such a translation is only possible with storage reels having a relatively small width, and with reels having a smaller capacity, as can be derived e.g. from FIG. 1 of US4687376.

The aim of the present invention is to provide an alternative marine pipeline installation vessel. The object of the invention is achieved by providing a marine pipeline installation vessel according to claim 1.

The marine pipeline installation vessel according to the present invention further comprises an integrally formed common reel support body, adapted to support the weight of the two vertical storage reels in a way that the left reel rotation axis and the right reel rotation axis form an obtuse angle, the reel support body being provided stationary with a left and right body end supported by the left and right reel support structure, respectively, such that the reel support body bridges the reel well and is only supported at its ends on the hull of the vessel. The vessel further comprises left and right bearing structures, provided between the reel support body and the left and right storage reels, respectively.

Compared to vessels wherein the storage reels are provided on deck, arranging the storage reels with a lower part thereof in the reel well provides the advantage that it lowers the point of gravity of the vessel.

Each storage reel of the present invention is advantageously adapted for the storage of 4000 m spooled pipeline.

The large load of the reel is concentrated at the reel well of the vessel, in particular at the left and right reel support structure. As a result of sea state induced vessel motions, this configuration may result in a bending moment in the hull of the vessel. The left-hand hull section and the right-hand hull section adjacent the reel well are advantageously dimensioned to counteract this bending moment. As such, at a given width of the vessel, there is a corresponding maximum width of the reel well to ensure this counteract. Advantageously, the width of the reel well may not exceed a half-width of the hull. For example, the ratio between width of the reel well and width of the hull is 1: 2,25.

The reel support body of the present invention is only supported at its ends. In particular, the left and right reel support structures are situated on opposite sides of the two storage reels. The reel support body is not supported at a section that extends between the two reels, in the reel well. As a consequence, the reels can be positioned closely adjacent to each other. The invention thus allows for positioning the reels closely adjacent to each other, which saves space and allows for an increased capacity.

Another possible advantage is that the lack of an additional support in the reel well makes the construction more easy to build. Advantageously, this also makes installation of the vertical reels and reel support structure more easy.

This advantageous configuration of a reel well flanked by hull sections can be realized in a mono-hull vessel, but also in a in a semi-submersible or other vessel type. The firing line, along which the unwound pipeline is being laid, is e.g. provided at the stern of the vessel. In alternative embodiments, the vessel has a water-entering zone, preferably a moonpool, at which the pipe to be laid enters the water. The storage reels may be positioned forward or backward of the water-entering zone.

The integrally formed common horizontal reel support body is adapted to support the weight of the two vertical storage reels in a way that the left reel rotation axis and the right reel rotation axis form an obtuse angle. An obtuse angle is less than 180 degrees.

Advantageously, the two reels are arranged symmetrically to each other with respect to a vertical longitudinal plane of the vessel. Preferably, the two reels have the same diameter.

A storage reel comprises a mid-plane, midway between the flanges of the reel, the mid-plane extending perpendicular to the reel rotation axis of the respective reel.

In an embodiment, the mid-plane of the left reel intersects the mid-plane of the right reel in a vertical longitudinal plane of the vessel, preferably the longitudinal mid-plane of the vessel. Herein, preferably, the mid-planes of the reels intersect in the vicinity of the pipeline launch assembly, e.g. a point where the pipe stored on either of the reels enters the firing line upon being unwound from the respective reel. In embodiments wherein a rigid pipeline is being laid, the mid-planes of the reels preferably intersect near a point where the pipe stored on either of the reels enters the straightener upon being unwound from the respective reel.

In embodiments, the mid-planes of the reels are each vertical, intersecting one another in a vertical longitudinal plane of the vessel, preferably the longitudinal mid-plane of the vessel. Preferably, herein, the obtuse angle is less than 170 degrees, more preferably between 130-150 degrees. Or, in other terms, in embodiments, these intersecting mid-planes of the reels enclose an angle of more than 5 degrees, preferably more than 10 degrees, most preferably more than 15 degrees, for example 17 degrees, with respect to a vertical longitudinal plane of the vessel, preferably the mid-plane of the vessel, when seen in plan view.

In other embodiments, the mid-planes of the reels are each non-vertical, so they each include an angle with respect to a vertical longitudinal plane of the vessel seen in horizontal longitudinal view onto the reels. For example, the non-vertical mid-planes intersect one another along a substantially horizontal line extending above the reels, preferably the horizontal line being located in the longitudinal mid-plane of the vessel. Herein, preferably, the obtuse angle is between 178 and 170 degrees, e.g. each mid-plane having an angle of 2 degrees with respect to a vertical longitudinal plane of the vessel, preferably the vertical mid-plane of the vessel, when seen in a horizontal longitudinal view onto the reels. Herein the reels are closer to one another at the top than at the bottom. For example, herein, the reel well that is flanked by a left-hand hull section and a right-hand hull section has inclined wall portions each with an inclination corresponding to the inclination of the neighbouring flange of one of the reels. In said arrangement, the reel well is wider at the bottom than at the top. The embodiment wherein the mid-planes of the reels are each non-vertical, is preferred in combination with a pipeline launch assembly having a pipeline guide that is configured such that at least in one operative inclined position of the launch assembly, the pipeline guide is in vertical projection above the reels. This means that in at least one operative position of the launch assembly the pipeline departs primarily upward from the reel towards the pipeline guide. In other, less tilted positions of the launch assembly, this departure will then be more in horizontal direction.

According to the invention, the left and right bearing structures are provided between the reel support body and the left and right hubs of the storage reels, respectively. Preferably the bearing structure has an outer diameter similar to the inner diameter of the hub, which may e.g. be a diameter of more than 2 meters.

According to the invention, the reel support body supports the storage reels in a way that the left reel rotation axis and the right reel rotation axis form an obtuse angle.

In embodiments, the left and right bearing structures are configured such that the respective reel axes of the storage reels form the obtuse angle. In particular, the left reel bearing is configured such that the left reel rotation axis defined by the hub forms a left angle with the reel support body, and the right reel bearing is configured such that the right reel rotation axis defined by the hub forms a right angle with the reel support body, the left and right angle being such that the hubs, and consequently the reel axes of the storage reels, form the obtuse angle.

In alternative embodiments, this is accomplished in that the reel support body comprises a left-hand body portion and a right-hand body portion which form an obtuse angle corresponding to the angle formed by the hubs, and consequently by the reel axes of the storage reels. The left-hand body portion supports the hub of the left storage reel and defines the left reel rotation axis, while the right-hand body portion supports the hub of the right storage reel and defines the right reel rotation axis.

Preferably, the integrally formed common reel support body is supported at its ends by the reel support structures, such that the support body is positioned essentially horizontally. In embodiments, the left and/or right support structure is configured to provide an upward translational movement of one or both ends of the reel support body. In such embodiments, the integrally formed common reel support body is thus not fully horizontal, but slightly tilted. This may be advantageous to promote proper unwinding of a pipeline.

Advantageously an associated reel drive is provided for each reel. Preferably, a left storage reel drive is provided to rotate the left storage reel adjacent the left vertical flange of the left storage reel. A right storage reel drive is, preferably, provided to rotate the right storage reel adjacent the right vertical flange of the right storage reel. Advantageously, the left storage reel drive and right storage reel drive allow the reels to rotate independently from each other.

In embodiments, the storage reel drive comprises an electric motor. Possibly, the storage reel drive engages on a vertical flange of the reel. Preferably, the storage reel drive comprises a rack and pinion drive along the circumference of the reel flange.

The pipeline launch assembly comprises a pipeline guide adapted to guide unwounded pipeline from the storage reel, over the pipeline guide, into the firing line. In embodiments, the pipeline guide has an elongated pipeline guide member orientated essentially in the direction of the storage reels and providing an essentially circular or semi-circular pipeline guide surface.

In embodiments, the pipeline guide is movably supported, e.g. via a pivot connection, allowing an angular adjustment of the pipeline guide. In particular is the position of the pipeline guide variable between a left orientation, in the direction of the mid-plane of the left storage reel, and a right orientation, in the direction of the mid-plane of the right storage reel.

In preferred embodiments, the pipeline launch assembly further comprises
- a straightener provided downstream of the storage reel in the direction of unspooling to provide straightening to the pipeline, in particular to rigid pipelines;
- a hang-off clamp adapted to support the weight of the launched pipeline in the firing line.

According to the invention, the reel support structure is a common integrally formed reel support body, being provided stationary with a left and right body end being supported by the left and right reel support structure, respectively, such that the reel support body bridges the reel well and is only supported at its ends on the hull of the vessel.

The invention will further be elucidated in relation to the drawings, in which:
Fig. 1 shows an example of a vessel according to the invention in reel-lay mode;
Fig. 2 shows a side view of the vessel of fig. 1;
Fig. 3 shows a top view of the vessel of fig. 1;
Fig. 4 shows a detail of fig. 3
Fig. 5 schematically shows a first embodiment of a reel support body according to the invention;
Fig. 6 schematically shows a second embodiment of a reel support body according to the invention;
Fig. 7 shows a transverse cross-section of another embodiment of a vessel according to the invention;
Fig. 8 shows the embodiment of figure 7 in plan view;
Fig. 9 shows a side view of the vessel of figure 7;
Fig. 10 shows a transverse cross-section of yet another embodiment of a vessel, which is not according to the invention.

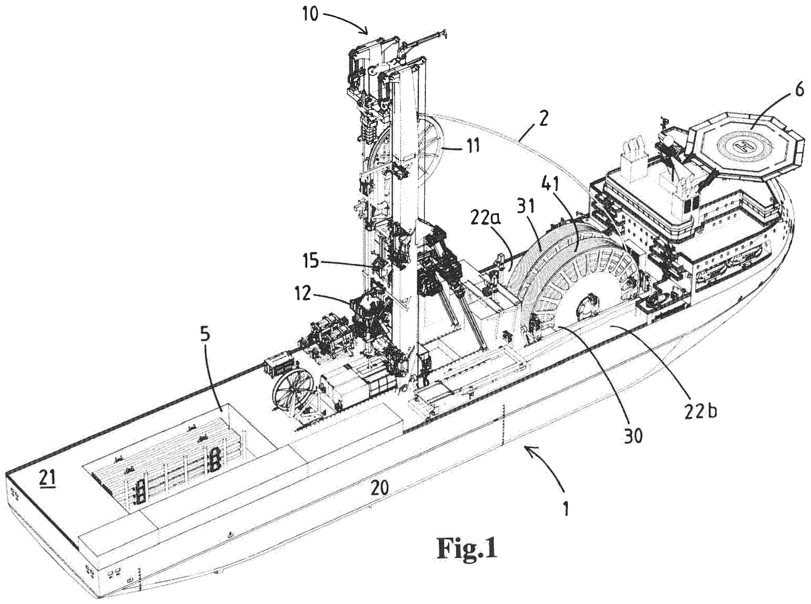

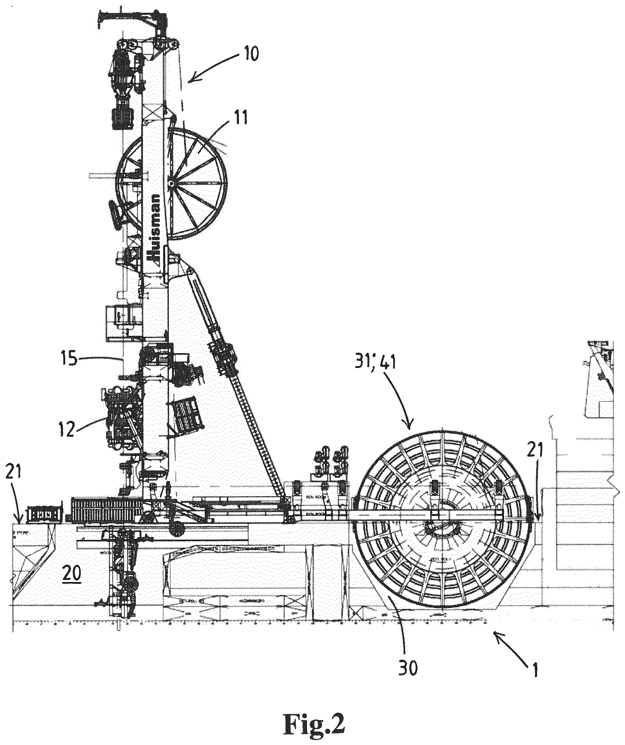

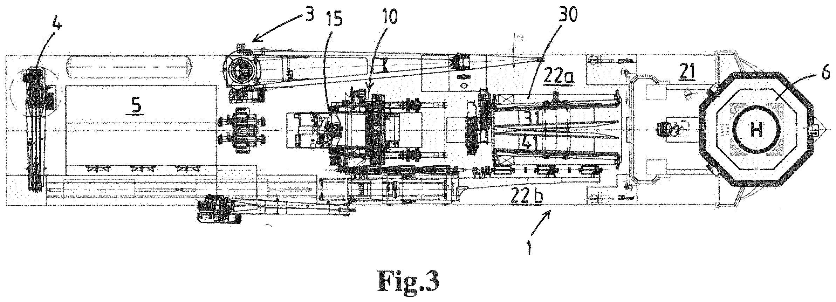

In figs. 1-4 a marine pipeline installation vessel 1 according to the invention is shown. The shown pipeline installation vessel 1 is, amongst others, used for laying an offshore pipeline 2 in the sea, onto the seabed. The vessel is at least adapted to carry out the reel lay method, which may be a reel lay method for laying rigid pipeline but the inventive vessel is also adapted to carry out a flexible reel lay method.

The vessel 1 of figs. 1-4 is also suitable for J-lay, and comprises a storage hold 5 for pipe sections. A tower 10 is provided, comprising J-lay equipment. The vessel is further equipped with a mast crane 3, a knuckle boom crane 4, a helicopter platform 6.

The vessel 1 comprises a hull 20 and a deck 21. In the hull a reel well 30 is provided which is located below deck 21, the reel well 30 being flanked by a left-hand hull section 22a and a right-hand hull section 22b.

A left vertical storage reel 31 and a right vertical storage reel 41 are arranged adjacent to each other and each with a lower part thereof in the reel well 30. Each storage reel comprises a left and right vertical flange 33a, 33b; 43a, 43b. Between the flanges of a storage reel an associated hub 34, 44 extends; the hub 34, 44 being adapted for the storage of a spooled pipeline to be laid. The hub 34, 44 defines a reel rotation axis about which the reel is rotatable. The left storage reel 31 is rotatable about a left reel rotation axis 32, and the right storage reel 41 being rotatable about a right reel rotation axis 42.

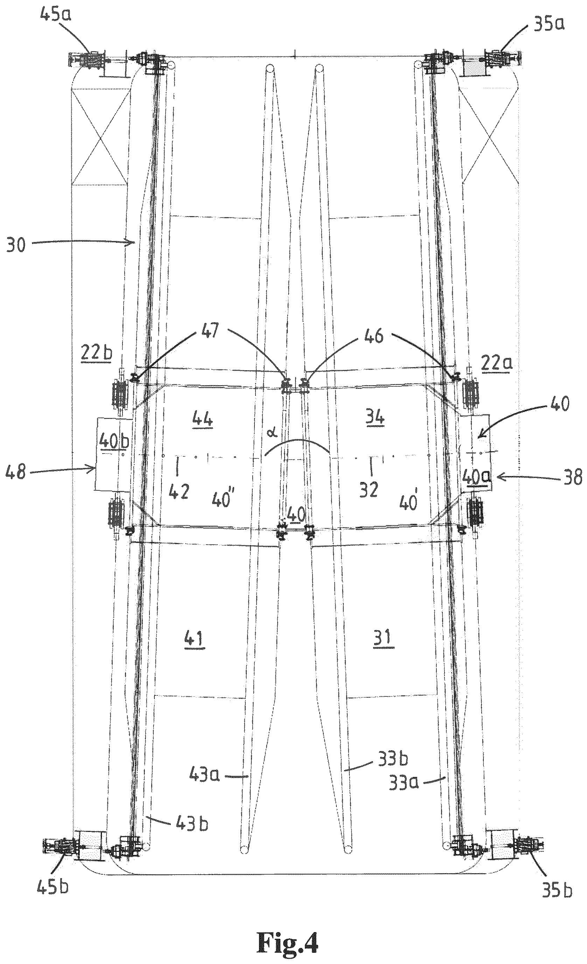

In fig. 4 a left storage reel drive 35a, 35b is shown which is provided to rotate the left storage reel 31. Two motors 35a, 35b are provided adjacent the left vertical flange 33a of the left storage reel 31 and in the vicinity of the left reel support structure. A right storage reel drive 45a, 45b is provided to rotate the right storage reel 41 adjacent the right vertical flange 43b of the right storage reel. Possibly, the storage reel drives 35a, 35b, 45a, 45b are electric motors, engaging on a vertical flange of the reel. Preferably, the storage reel drive comprises a rack and pinion drive along the circumference of the reel flange.

The same tower 10 used for J-lay is here also equipped with components affording reel lay capability. An example of such a dual capability installation is the installation on the pipelay vessel Aegir of Heerema. The tower 10, also referred to as a pipeline launch assembly, is mounted to the vessel downstream of the reels 31, 41 in a direction of unspooling, which pipeline launch assembly 10 is adapted to launch the unwound pipeline in a firing line 15 into the sea. The pipeline launch assembly 10 comprises a pipeline guide 11 adapted to guide unwounded pipeline from the storage reel over the pipeline guide into the firing line 15. Here the pipeline guide 11 is embodied as a wheel, also referred to as aligner wheel.

The pipeline launch assembly further comprises at least one tensioner 12 provided downstream of the pipeline guide 11 which is adapted for engaging the pipeline in the firing line 15 and supporting at least part of the weight of the launched pipeline to control the rate of laying of the pipeline on the seabed,

The pipeline launch assembly further comprises a straightener 13 provided downstream of the storage reels in the direction of unspooling to provide straightening to the pipeline.

The pipeline launch assembly further comprises a hang-off clamp (not shown) adapted to support the weight of the launched pipeline in the firing line.

According to the present invention, an integrally formed common reel support body 40 is provided, adapted to support the weight of the two vertical storage reels 31, 41 in a way that the left reel rotation axis 32 and the right reel rotation axis 42 form an obtuse angle α. This obtuse angle α corresponds to 180-β, wherein β is the angle between the mid-planes of the storage reels.

The reel support body 40 is provided stationary with a left and right body end 40a, 40b; each being supported by the left reel support structure 38 and right reel support structure 48, respectively, such that the reel support body 40 bridges the reel well 30 and is only supported at its ends on the hull of the vessel. Left and right bearing structures 46, 47 are provided between the reel support body 40 and the left and right storage reels 34, 44, respectively. The reel support body 40 comprises a left-hand body portion 40' and a right-hand body portion 40" which form obtuse angle α corresponding to the angle α formed by the hubs, and consequently by the reel axes of the storage reels.

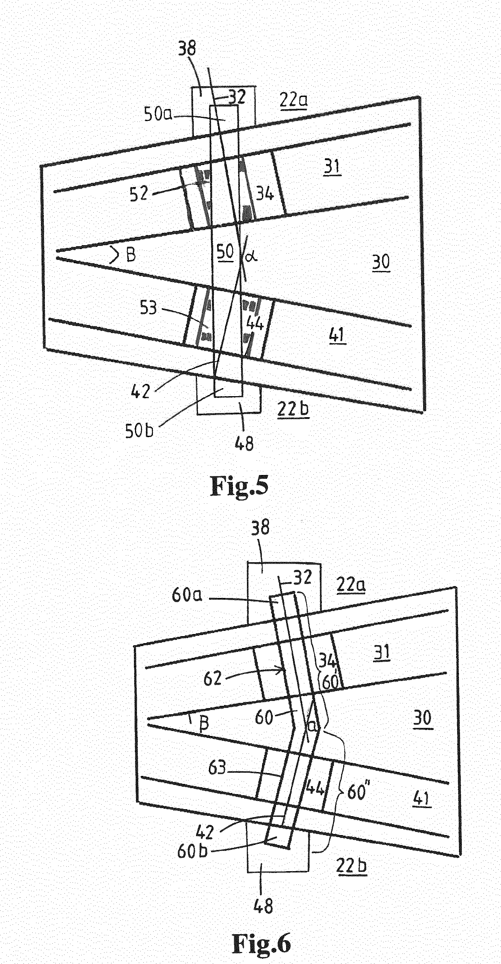

Distinct embodiments of a reel support body 50, 60 are schematically shown in figs. 5, 6 respectively.

The left and right storage reels 31, 41 with hubs 34, 44 are also schematically shown, provided in a reel well 30. The reel well 30 is flanked by a left-hand hull section 22a and a right-hand hull section 22b. A left reel support structure 38 is provided on the left-hand hull section 22a, and a right reel support structure 48 is provided on the right-hand hull section 22b.

The integrally formed common reel support body 50 of fig. 5, and 60 of fig. 6 is provided stationary with a left body end 50a, 60a and right body end 50b, 60b, being supported by the left and right reel support structure 38, 48, respectively, such that the reel support body bridges the reel well and is only supported at its ends on the hull of the vessel.

A left and right bearing structure 52, 53; 62, 63 is provided between the reel support body 50 and the left and right storage reels 31, 41, respectively.

The left and right bearing structure 52, 53 of fig. 5 are configured such that the respective reel axes 32, 42 of the storage reels form the obtuse angle α.

In the integrally formed common reel support body 60 of fig. 6, the reel support body 60 comprises a left-hand body portion 60' and a right-hand body portion 60" which form an obtuse α angle corresponding to the angle α formed by the hubs, and consequently by the reel axes of the storage reels.

Figures 6 -8 illustrate another embodiment of a marine pipeline installation vessel 101 for laying an offshore pipeline 102 in the sea, onto the seabed. Said vessel is at least adapted to carry out the reel lay method. The vessel 102 comprises a hull 120 and a deck 121, wherein in the hull a reel well 130 is provided which is located below deck. The reel well 130 is flanked by a left-hand hull section 122a and a right-hand hull section 122b.

The vessel comprises a left and a right vertical storage reel 131, 141, arranged adjacent to each other and each with a lower part thereof in the reel well. Each storage reel comprises a left and right flange 133a, 133b; 143a, 143b and a hub 134, 144 extending between the flanges and being adapted for the storage of a spooled pipeline to be laid, the hub defining a reel rotation axis 132, 142 about which the reel is rotatable.

A left reel support structure 138 is provided on the left-hand hull section 122a and a right reel support structure 148 is provided on the right-hand hull section 122b.

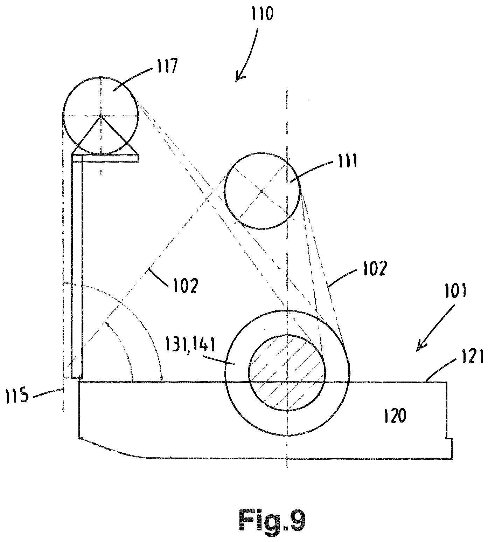

The vessel further comprises a pipeline launch assembly 110, see fig. 9, mounted to the vessel downstream of the reels 131; 141 in a direction of unspooling, which pipeline launch assembly is adapted to launch the unwound pipeline in a firing line 115 into the sea. In the shown embodiment, the pipeline launch assembly comprises a pipeline guide 111 and a pipeline guide 117, both adapted to guide unwounded pipeline from the storage reel over the pipeline guide into the firing line.

Preferably, but not shown, the pipeline launch assembly further comprises at least one tensioner provided downstream of the pipeline guide which is adapted for engaging the pipeline in the firing line and supporting at least part of the weight of the launched pipeline to control the rate of laying of the pipeline on the seabed.

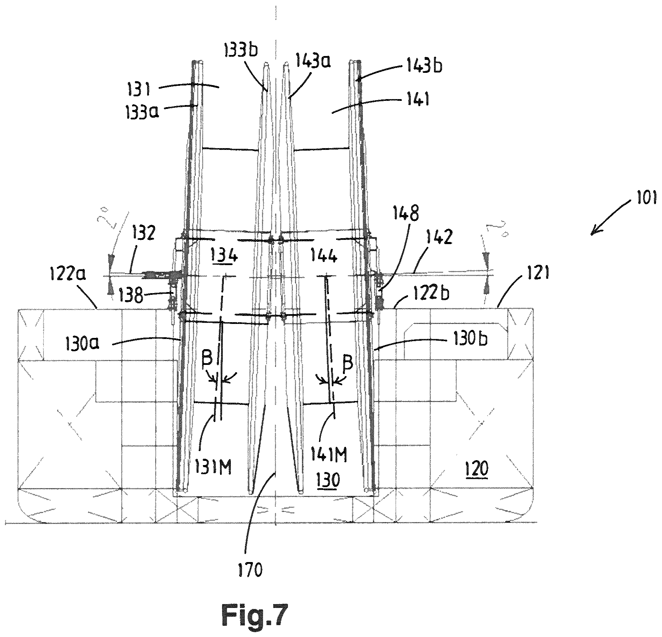

According to this example, the vessel 101 further comprises a reel support structure, adapted to support the weight of the two vertical storage reels 131, 141 in a way that the left reel rotation axis 132 and the right reel rotation axis 142 form an obtuse angle α. In fig. 7, it is shown that both the left and right reel rotation axes 132, 142 are positioned at an angle of 2° with respect to the horizontal axis. Consequently, the left and right reel rotation axes 132, 142 form an angle of 176° with respect to each other. The mid-planes 131M, 141M of the reels 131, 141 are each non-vertical, so they each form an angle β with respect to a vertical longitudinal plane 170 of the vessel seen in horizontal longitudinal view onto the reels.

In this example, the non-vertical mid-planes 131M, 141M intersect one another along a substantially horizontal line extending above the reels, here, as preferred, the horizontal line being located in the longitudinal mid-plane 170 of the vessel.

The obtuse angle is 176 degrees in the depicted example, so each mid-plane having an angle of 2 degrees with respect to a vertical longitudinal mid-plane of the vessel, when seen in a horizontal longitudinal view onto the reels. As can be seen, the reels are closer to one another at the top than at the bottom

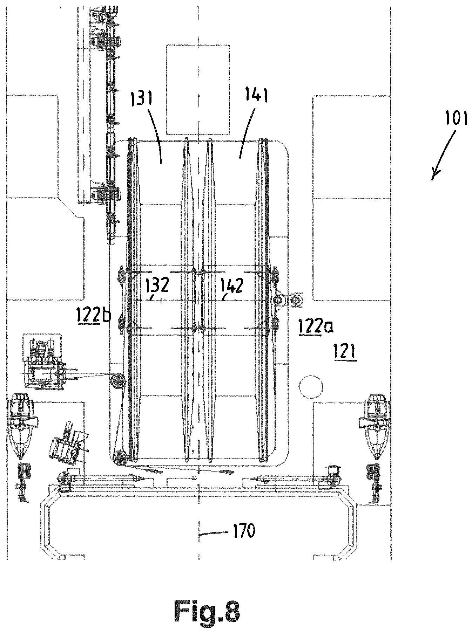

In plan view, see figure 8, the reel axes 132, 142 are each perpendicular to the vertical longitudinal mid-plane 170 of the vessel and coincide with one another.

One advantage of this arrangement, compared to the embodiments discussed above, is that the center of gravity of each of the reels is located on a straight line that is centered relative to the reel supports. This reduces or avoids undue torsional loads in the support system of the reels.

Also, as discussed and now elucidated with reference to fig. 9, this design is advantageous in combination with a pipeline launch assembly 110 having a pipeline guide 111, 117 that is configured such that at least in one operative inclined position of the launch assembly, the pipeline guide is in vertical projection above the reels 131, 141. This means that in at least one operative position of the launch assembly 110 the pipeline departs primarily upward from the reel towards the pipeline guide 111. Pipeline guide 111 is positioned rather close to the reels. In other, less tilted positions of the launch assembly, this departure will then be more in horizontal direction, such as to pipeline guide 117.

Figure 7 also shows that the reel well 130 that is flanked by a left-hand hull section 122a and a right-hand hull section 122b has inclined wall portions 130a, 130b, each with an inclination corresponding to the inclination of the neighbouring flange of one of the reels. In said arrangement, the reel well is wider at the bottom than at the top.

In the embodiment of fig. 9, the reel support structure is embodied as a common integrally formed reel support body according to the first aspect of the invention. The reel support structure is not visible per se as it extends through the hubs 134, 144 of the reels. The reel support structure is provided stationary with a left and right body end being supported by the left and right reel support structure 138, 148, respectively, such that the reel support body bridges the reel well and is only supported at its ends on the hull of the vessel.

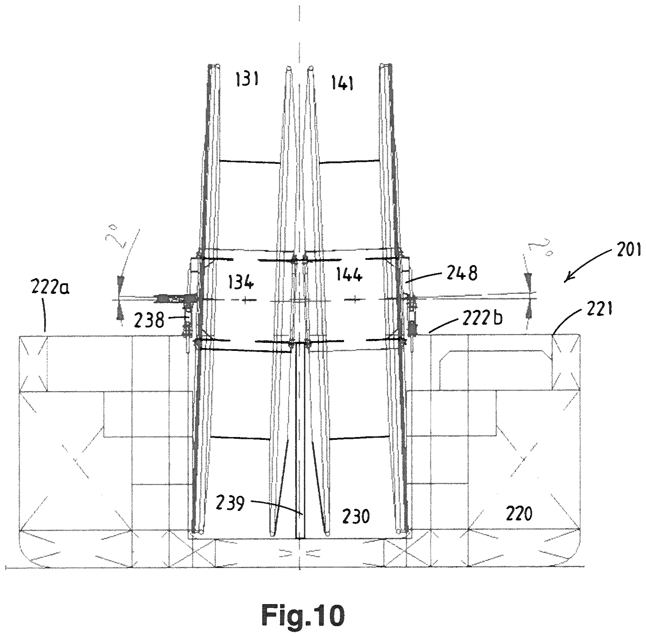

The vessel 201 of fig. 10, not covered by the claims, strongly resembles the vessel 101 of fig. 7. Common parts have been given same numerals to which '100' has been added. The difference is that the reel support structure of fig. 10 is not a common integrally formed reel support body, but comprises two support bodies, one for each vertical storage reel, one end of the support bodies being supported by the left and right reel support structure 238, 248, and the other end by a central support 239 between the storage reels.

## Claims

1. Marine pipeline installation vessel (1) for laying an offshore pipeline (2) in the sea, onto the seabed, said vessel at least being adapted to carry out the reel lay method, wherein the vessel comprises:
• a hull (20) and a deck (21), wherein in the hull a reel well (30) is provided which is located below deck, the reel well (30) being flanked by a left-hand hull section (22a) and a right-hand hull section (22b);
• a left and a right vertical storage reel (31; 41), arranged adjacent to each other and each with a lower part thereof in the reel well; each storage reel comprising:
o a left and right flange (33a, 33b; 43a, 43b);
o a hub (34,44) extending between the flanges and being adapted for the storage of a spooled pipeline to be laid, the hub defining a reel rotation axis (32, 42) about which the reel is rotatable;
• a left reel support structure (38) provided on the left-hand hull section (22a), and
• a right reel support structure (48) provided on the right-hand hull section(22b);
• a pipeline launch assembly (10) mounted to the vessel downstream of the reels (31; 41) in a direction of unspooling, which pipeline launch assembly is adapted to launch the unwound pipeline in a firing line (15) into the sea, the pipeline launch assembly comprising:
o a pipeline guide (11) adapted to guide unwounded pipeline from the storage reel over the pipeline guide into the firing line;
o at least one tensioner (12) provided downstream of the pipeline guide which is adapted for engaging the pipeline in the firing line and supporting at least part of the weight of the launched pipeline to control the rate of laying of the pipeline on the seabed,
• an integrally formed common reel support body (40; 50; 60), adapted to support the weight of the two vertical storage reels, the integrally formed common reel support body (40, 50, 60) having a left and right body end (50a, 50b; 60a, 60b) being supported by the left and right reel support structure, respectively, such that the reel support body bridges the reel well and is only supported at its ends on the hull of the vessel; and
• left and right bearing structures (46, 47; 52, 53; 62, 63), provided between the reel support body and the left and right storage reels, respectively,
**characterized in that** the integrally formed common reel support body (40, 50, 60) is provided stationary, and **in that** the integrally formed common reel support body (40, 50, 60) and the left and right bearing structures (46, 47; 52, 53; 62, 63) are adapted to support the two vertical storage reels in a way that the left reel rotation axis (32) and the right reel rotation axis (42) form an obtuse angle (∝).

2. Marine pipeline installation vessel according to claim 1, wherein the left and right bearing structures (52, 53) are configured such that the respective reel axes of the storage reels form the obtuse angle.

3. Marine pipeline installation vessel according to claim 1, wherein the reel support body comprises a left-hand body portion (40'; 60') and a right-hand body portion (40"; 60") which form an obtuse angle (∝) corresponding to the angle (∝) formed by the hubs, and consequently by the reel axes of the storage reels.

4. Marine pipeline installation vessel according to any of the preceding claims, wherein the pipeline guide (11) is movably supported allowing an angular adjustment of the pipeline guide.

5. Marine pipeline installation vessel according to any of the preceding claims, wherein the pipeline launch assembly further comprises a straightener (13) provided downstream of the storage reels in the direction of unspooling to provide straightening to the pipeline.

6. Marine pipeline installation vessel according to any of the preceding claims, wherein the pipeline launch assembly further comprises a hang-off clamp (14) adapted to support the weight of the launched pipeline in the firing line.

7. Marine pipeline installation vessel according to any of the preceding claims, wherein the left and/or right support structure is configured to provide an upward translational movement of one or both ends of the reel support body.

8. Method for reel laying an offshore pipeline on the seabed, said method comprising the step of using the vessel according to one or more of the preceding claims.

## Patentansprüche

1. Marines Pipelinemontageschiff (1) zum Verlegen einer Offshore-Pipeline (2) im Meer auf dem Meeresboden, wobei das Schiff zumindest ausgestaltet ist, um das Reel-Lay-Verfahren auszuführen, wobei das Schiff umfasst:
• einen Rumpf (20) und ein Deck (21), wobei in dem Rumpf eine Trommelvertiefung (30) vorgesehen ist, die sich unter Deck befindet, wobei die Trommelvertiefung (30) von einem linken Rumpfabschnitt (22a) und einem rechten Rumpfabschnitt (22b) flankiert ist;
• eine linke und eine rechte vertikale Lagerungstrommel (31; 41), die benachbart zueinander und jeweils mit einem unteren Teil davon in der Trommelvertiefung angeordnet sind; wobei jede Lagerungstrommel umfasst:
o einen linken und einen rechten Flansch (33a, 33b; 43a, 43b) ;
o eine Nabe (34, 44), die sich zwischen den Flanschen erstreckt und für die Lagerung einer zu verlegenden aufgewickelten Pipeline ausgestaltet ist, wobei die Nabe eine Trommeldrehachse (32, 42) definiert, um die die Trommel drehbar ist;
• eine linke Trommelhaltestruktur (38), die an dem linken Rumpfabschnitt (22a) vorgesehen ist, und
• eine rechte Trommelhaltestruktur (48), die an dem rechten Rumpfabschnitt (22b) vorgesehen ist;
• eine Pipelineaussetzanordnung (10), die an dem Schiff stromabwärts von den Trommeln (31; 41) in einer Abwickelrichtung angebracht ist, wobei die Pipelineaussetzanordnung ausgestaltet ist, um die abgewickelte Pipeline in einer Firing Line (15) in das Meer auszusetzen, wobei die Pipelineaussetzanordnung umfasst:
o eine Pipelineführung (11), die ausgestaltet ist, um die abgewickelte Pipeline von der Lagerungstrommel über die Pipelineführung in die Firing Line zu führen;
o mindestens eine Spannvorrichtung (12), die stromabwärts der Pipelineführung vorgesehen ist und die ausgestaltet ist, um mit der Pipeline in der Firing Line in Eingriff zu kommen und um zumindest einen Teil des Gewichts der ausgesetzten Pipeline zu halten, um die Verlegungsgeschwindigkeit der Pipeline auf dem Meeresboden zu steuern,
• einen integral ausgebildeten gemeinsamen Trommelhaltekörper (40; 50; 60), der ausgestaltet ist, um das Gewicht der beiden vertikalen Lagerungstrommeln zu tragen, wobei der integral ausgebildete gemeinsame Trommelhaltekörper (40, 50, 60) ein linkes und ein rechtes Körperende (50a, 50b; 60a, 60b) aufweist, die von der linken bzw. rechten Trommelhaltestruktur gehalten werden, so dass der Trommelhaltekörper die Trommelvertiefung überbrückt und nur an seinen Enden an dem Rumpf des Schiffes gehalten wird; und
• linke und rechte Lagerstrukturen (46, 47; 52, 53; 62, 63), die zwischen dem Trommelhaltekörper und der linken bzw. rechten Lagerungstrommel vorgesehen sind,
**dadurch gekennzeichnet, dass** der integral ausgebildete gemeinsame Trommelhaltekörper (40, 50, 60) stationär vorhanden ist, und dass der integral ausgebildete gemeinsame Trommelhaltekörper (40, 50, 60) und die linken und die rechten Lagerstrukturen (46, 47; 52, 53; 62, 63) ausgestaltet sind, um die beiden vertikalen Lagerungstrommeln in einer Weise zu halten, dass die linke Trommeldrehachse (32) und die rechte Trommeldrehachse (42) einen stumpfen Winkel (α) bilden.

2. Marines Pipelinemontageschiff nach Anspruch 1, wobei die linken und die rechten Lagerstrukturen (52, 53) ausgestaltet sind, damit die jeweiligen Trommelachsen der Lagerungstrommeln den stumpfen Winkel bilden.

3. Marines Pipelinemontageschiff nach Anspruch 1, wobei der Trommelhaltekörper einen linken Körperabschnitt (40'; 60') und einen rechten Körperabschnitt (40"; 60") umfasst, die einen stumpfen Winkel (α) bilden, der dem Winkel (α) entspricht, der von den Naben und folglich von den Trommelachsen der Lagerungstrommeln gebildet wird.

4. Marines Pipelinemontageschiff nach einem der vorhergehenden Ansprüche, wobei die Pipelineführung (11) beweglich gelagert ist, wobei eine Winkeleinstellung der Pipelineführung ermöglicht wird.

5. Marines Pipelinemontageschiff nach einem der vorhergehenden Ansprüche, wobei die Pipelineaussetzanordnung darüber hinaus einen Richtapparat (13) umfasst, der in der Abwickelrichtung stromabwärts von den Lagerungstrommeln vorgesehen ist, um die Pipeline auszurichten.

6. Marines Pipelinemontageschiff nach einem der vorhergehenden Ansprüche, wobei die Pipelineaussetzanordnung darüber hinaus einen Abhängehalter (14) umfasst, der ausgestaltet ist, um das Gewicht der ausgesetzten Pipeline in der Firing Line zu tragen.

7. Marines Pipelinemontageschiff nach einem der vorangehenden Ansprüche, wobei die linke und/oder die rechte Haltestruktur ausgestaltet ist, um eine aufwärts gerichtete Translationsbewegung eines oder beider Enden des Trommelhaltekörpers zu ermöglichen.

8. Verfahren zum Reel-Laying einer Offshore-Pipeline auf dem Meeresboden, wobei das Verfahren den Schritt eines Verwendens des Schiffes nach einem oder mehreren der vorhergehenden Ansprüche umfasst.

## Revendications

1. Navire de pose de pipelines maritimes (1) destiné à installer un pipeline en mer (2), sur le fond marin, ledit navire étant au moins adapté pour exécuter le procédé de pose de dévidoir, dans lequel le navire comprend :
- une coque (20) et un pont (21), dans lequel, dans la coque, une fosse à dévidoir (30) est prévue et est située sous le pont, la fosse à dévidoir (30) étant entourée par une section de coque de gauche (22a) et une section de coque de droite (22b) ;
- des bobines de stockage verticale gauche et droite (31 ; 41), prévues de manière adjacente l'une à l'autre et ayant chacune une partie inférieure contenue dans la fosse à dévidoir ; chaque bobine de stockage comprenant :
- une embase gauche et droite (33a, 33b ; 43a, 43b) ;
- un moyeu (34, 44) qui s'étend entre les embases et adapté pour le stockage d'un pipeline en attente à poser, le moyeu définissant un axe de rotation de dévidoir (32, 42) autour duquel le dévidoir peut pivoter ;
- une structure de support de bobine gauche (38) prévue sur la section de coque de gauche (22a), et
- une structure de support de bobine de droite (48) prévue sur la section de coque de droite (22b) ;
- un ensemble de lancement de pipeline (10) monté sur le navire en aval des bobines (31 ; 41) dans une direction de déroulement, ledit ensemble de lancement de pipeline étant adapté pour lancer le pipeline déroulé dans une ligne de tir (15) dans la mer, l'ensemble de lancement de pipeline comprenant :
- un guide de pipeline (11) adapté pour guider le pipeline déroulé depuis la bobine de stockage sur le guide de pipeline, jusqu'à la ligne de tir ;
- au moins un tendeur (12) prévu en aval du guide de pipeline, qui est adapté pour engager le pipeline dans la ligne de tir et supporter au moins une partie du poids du pipeline lancé afin de contrôler la vitesse de pose du pipeline sur le fond marin,
- un corps de support de bobine commun formé de manière intégrale (40 ; 50 ; 60) adapté pour supporter le poids des deux bobines de stockage verticales, le corps de support de bobine commun formé de manière intégrale (40, 50, 60) ayant une extrémité de corps gauche et droite (50a, 50b ; 60a, 60b) qui est supportée par la structure de support de bobine de gauche et de droite, respectivement, de sorte que le corps de support de bobine recouvre la fosse à dévidoir et soit supporté uniquement à ses extrémités sur la coque du navire ; et
- des structures d'appui de gauche et de droite (46, 47 ; 52, 53 ; 62, 63), prévues entre le corps de support de bobine et les bobines de stockage de gauche et de droite, respectivement,
**caractérisé en ce que** le corps de support de bobine commun formé de manière intégrale (40, 50, 60) est stationnaire, et **en ce que** le corps de support de bobine commun formé de manière intégrale (40, 50, 60) et les structures d'appui de gauche et de droite (46, 47 ; 52, 53 ; 62, 63) sont adaptés pour supporter les deux bobines de stockage verticales de sorte que l'axe de rotation de bobine de gauche (32) et l'axe de rotation de bobine de droite (42) forment un angle obtus (α).

2. Navire de pose de pipelines maritimes selon la revendication 1, dans lequel les structures d'appui de gauche et de droite (52, 53) sont configurées de sorte que les axes de bobines respectifs des bobines de stockage forment l'angle obtus.

3. Navire de pose de pipelines maritimes selon la revendication 1, dans lequel le corps de support de bobine comprend une partie de corps de gauche (40' ; 60') et une partie de corps de droite (40" ; 60") qui forment un angle obtus (α) qui correspond à l'angle (α) formé par les moyeux, et, par conséquent, par les axes de bobines des bobines de stockage.

4. Navire de pose de pipelines maritimes selon l'une quelconque des revendications précédentes, dans lequel le guide de pipeline (11) est supporté de manière mobile en permettant un ajustement angulaire du guide de pipeline.

5. Navire de pose de pipelines maritimes selon l'une quelconque des revendications précédentes, dans lequel l'ensemble de lancement de pipeline comprend en outre un redresseur (13) prévu en aval des bobines de stockage dans la direction de déroulement afin de redresser le pipeline.

6. Navire de pose de pipelines maritimes selon l'une quelconque des revendications précédentes, dans lequel l'ensemble de lancement de pipeline comprend en outre un système de pendant (14) adapté pour supporter le poids du pipeline lancé dans la ligne de tir.

7. Navire de pose de pipelines maritimes selon l'une quelconque des revendications précédentes, dans lequel la structure de support de gauche et/ou de droite est configurée pour assurer un mouvement de translation ascendant de l'une ou des deux extrémité(s) du corps de support de bobine.

8. Procédé de pose d'un pipeline maritime sur le fond marin, ledit procédé comprenant l'étape d'utilisation du navire selon une ou plusieurs des revendications précédentes.
